# EUROPEAN PATENT SPECIFICATION

(11) **EP 3 695 985 B1**
(45) Date of publication and mention of the grant of the patent: **15.03.2023**
(21) Application number: 18866784.4
(22) Date of filing: 30.08.2018
(51) Int. Cl.: B60C 11/00, B60C 11/03

(54) **MOTORCYCLE TIRE**
MOTORRADREIFEN
PNEU DE MOTOCYCLETTE

(30) Priority: 11.10.2017 JP 2017197974
(43) Date of publication of application: 19.08.2020
(73) Proprietor: Bridgestone Corporation, Tokyo 104-8340 (JP)
(72) Inventor: NAKAMURA, Takamitsu, Tokyo 104-8340 (JP); TOKITOH, Yasufumi, Tokyo 104-8340 (JP); SHIMAMURA, Naoki, Tokyo 104-8340 (JP)
(74) Representative: Marks & Clerk LLP
(86) International application number: PCT/JP2018/032214
(87) International publication number: WO 2019/073714

(56) References cited:
- EP-A1- 2 626 220
- EP-A1- 3 187 344
- JP-A- S6 094 804
- JP-A- H11 189 010
- JP-A- 2001 010 310
- JP-A- 2001 039 120
- JP-A- 2005 271 760
- JP-A- 2012 513 929
- JP-A- 2016 030 452
- JP-A- 2016 068 906

## Description

### TECHNICAL FIELD

The present invention relates to a motorcycle tire (hereinafter, also simply referred to as a "tire"), and more particularly, to a motorcycle tire including an improved tread portion, and particularly to a motorcycle rear tire.

### BACKGROUND ART

A motorcycle tire has a shape with a round cross-section in which the tire crown has a smaller radius of curvature than those for four-wheeled vehicle tires, due to characteristics of a two-wheeled vehicle that turns while leaning the body, unlike four-wheeled vehicles such as passenger cars, trucks or buses. In other words, in a motorcycle pneumatic tire, when a motorcycle is traveling straight, the center of a tread mainly contacts the ground, and when turning, a shoulder portion of the tread contacts the ground.

In view of such characteristics of motorcycle tires, examples of a method for ensuring grip performance of a motorcycle tire when turning include a technique of arranging a low-hardness rubber compound on a shoulder portion of a tread used during turning. On the other hand, in order to improve the drainage of a motorcycle tire, it is advantageous to provide a lateral groove extending in the tire width direction across the tire equator on an entire tread grounding portion, and further provide a plurality of other lateral grooves to have a structure in which water is discharged from a tread end (see, for example, Patent Document 1). Attention is drawn to the disclosures of JP2001-010310A, EP2626220A1 and EP3187344A1.

### RELATED ART DOCUMENT

### PATENT DOCUMENT

Patent Document 1 JP2016-068906A (Claims and the like)

### SUMMARY OF THE INVENTION

### PROBLEMS TO BE SOLVED BY THE INVENTION

In order to improve the grip performance of a motorcycle tire when turning on a wet road surface such as when it is raining, it is conceivable to incorporate both of the above-described two techniques. However, in this case, there is a problem that the rigidity of a shoulder portion of the tread is reduced, the rigidity in the tire straight traveling direction at the time of turning is not sufficiently secured, and the steering stability is deteriorated.

Accordingly, an object of the present invention is to provide a motorcycle tire that maintains the rigidity during turning and ensures favorable steering stability while further improving the wet grip performance during turning.

### MEANS FOR SOLVING THE PROBLEMS

As a result of intensive studies, the present inventors have found that the above-described problems can be solved by defining arrangement conditions of tread rubbers and grooves in a predetermined manner, thereby completing the present invention.

Specifically, the present invention provides a motorcycle tire as claimed in claim 1.

In the tire of the present invention, it is preferable that the acute angle *θ4* formed by the fourth groove portion of the first groove with respect to the tire circumferential direction, the acute angle *θ5* formed by the second groove with respect to the tire circumferential direction, and the acute angle *θ6* formed by the fifth groove portion of the third groove with respect to the tire circumferential direction satisfy *θ4* ≈ *θ5* ≈ *θ6*, and a distance *a* between the second groove and the third groove and a distance *b* between the third groove and the first groove in the tire circumferential direction measured between the open ends of the tire grounding portion satisfy *a* ≈ *b.* In the tire of the present invention, it is also preferable that a shallow groove is provided as claimed in claim 3.

Here, in the present invention, the half width P/2 of the peripheral length means 1/2 of the tire width direction distance P between both tread ends TEs measured along the tread surface in an unloaded state with a tire mounted on an applicable rim and filled to a specified internal pressure. Herein, the "applicable rim" means a rim specified by an industrial standard valid in a region where a tire is produced and used, and "specified internal pressure" means air pressure corresponding to the maximum load capacity in an application size described in this industrial standard. The industrial standards are JATMA YEAR BOOK of Japan Automobile Tire Association (JATMA) in Japan, STANDARDS MANUAL of The European Tyre and Rim Technical Organisation (ETRTO) in Europe, YEAR BOOK of The Tire and Rim Association, Inc. (TRA) in the United States, and the like.

### EFFECTS OF THE INVENTION

According to the present invention, a motorcycle tire that maintains the rigidity during turning and ensures favorable steering stability while further improving the wet grip performance during turning can be provided.

### BRIEF DESCRIPTION OF THE DRAWINGS

FIG. 1 is a sectional view in the width direction showing an example of a motorcycle tire according to the present invention.
FIG. 2 is a partial development view showing a tread pattern of an example of a motorcycle tire of the present invention.
FIG. 3 is a partial development view showing a tread pattern of a motorcycle tire of Comparative Example 2.

### MODE FOR CARRYING OUT THE INVENTION

Hereinafter, embodiments of the present invention will be described in detail with reference to the drawings.

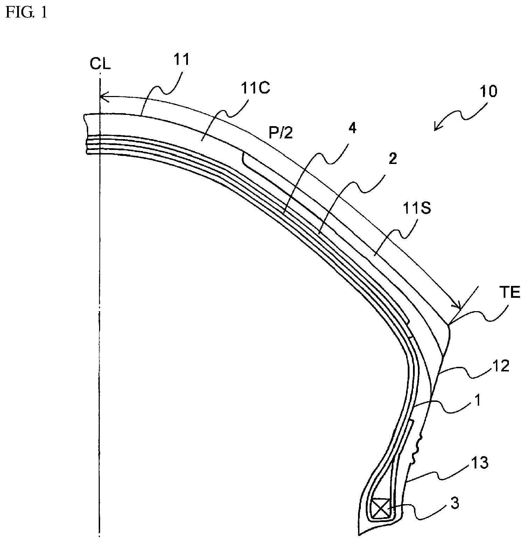

FIG. 1 is a sectional view of the width direction showing an example of the motorcycle tire according to the present invention. The illustrated tire 10 of the present invention includes a tread portion 11 forming a grounding portion, a pair of sidewall portions 12 extending inward in the tire radial direction continuously from both sides of the tread portion, and a pair of bead portions 13 that are each continuous with the inner peripheral side of each of the sidewall portions 12. The tread portion 11, the sidewall portion 12, and the bead portion 13 are reinforced by at least one, for example, one or two carcass plies 1 toroidally extending between a pair of the bead portions 13, and at least one, for example, one or two belt layers 2 are arranged outside the carcass ply 1 in the tire radial direction.

As shown in FIG. 1, in the motorcycle tire 10 of the present invention, the tread portion 11 forming the tire grounding portion includes a central rubber 11C arranged across a tire equator CL and a both-side rubber 1 1S arranged at both ends in the tire width direction, and has a structure in which the central rubber 11C and the both-side rubber 11S are sequentially layered on both side portions in the tire width direction. The both-side rubber 11S has a modulus lower than that of the central rubber 11C. Specifically, in the motorcycle tire 10 of the present invention, since the center side of the tire grounding portion is made of the central rubber 11C having a relatively high modulus, and the shoulder side is made of the both-side rubber 11S having a relatively low modulus, both the wear resistance during straight traveling and the grip performance during turning can be achieved.

In the present invention, the central rubber 11C extends from the tire equator CL to a position of from 1/4 to 1/2, and particularly to a position of from 5/16 to 7/16 of the half width P/2 of the peripheral length. When the area in which the central rubber 11C is provided is too wide, the grip performance during turning is not sufficiently obtained, and when the area in which the both-side rubbers 11S are provided is too wide, the wear resistance deteriorates.

Here, in the present invention, regarding the central rubber 11C and the both-side rubber 115, the modulus is not specifically limited as long as the central rubber 11C has a relatively high modulus and the both-side rubber 11S has a relatively low modulus, and the modulus can be appropriately selected within a range usually used for a tread rubber of a tire. For example, regarding the specific modulus of the rubber composition constituting each rubber, using a 300% modulus at 100°C, the 300% modulus M₃₀₀(C) of the central rubber 11C is in a range of from 9 MPa to 14 MPa, and the 300% modulus M₃₀₀(S) of the both-side rubber 11S is in a range of from 6 MPa to 12 MPa, and M₃₀₀(C) > M₃₀₀(S) is satisfied. By setting the 300% modulus of the central rubber 11C to the above-described range, a favorable wear resistance can be obtained, and by setting the 300% modulus of the both-side rubber 11S to the above-described range, a favorable grip performance during turning can be obtained.

In the present invention, the thickness of the central rubber 11C at the tire equator CL or the thickness of the tread rubber on the belt layer 2 can be, for example, from 8 mm to 12 mm, and the thickness of both-side rubber 11S can be in a range of from 15% to 90% of the thickness of the central rubber 11C.

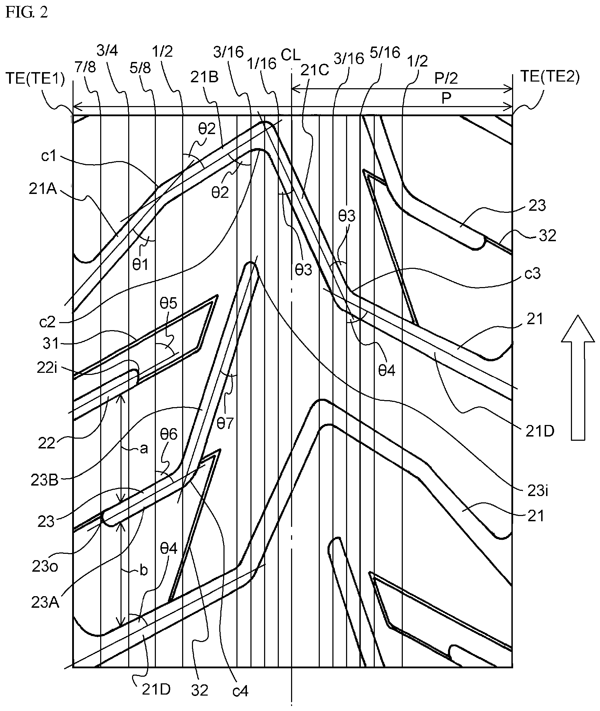

FIG. 2 is a partial development view showing an example of a tread pattern of the motorcycle tire of the present invention. As illustrated, the motorcycle tire of the present invention includes, on a tire grounding portion, a directional pattern specifying a rotation direction when the tire is mounted on a vehicle. The arrow in the figure indicates the rotation direction of the tire.

As illustrated, in the motorcycle tire of the present invention, on the tire grounding portion, a first groove 21 that extends across the tire equator CL and opens at both ends in the tire width direction at the tread ends TE, a second groove 22 whose outer side end in the tire width direction is open at the tread end TE and whose inner side end in the tire width direction terminates in one side surface in the tire width direction, and a third groove 23 whose both ends in the tire width direction terminate in one side surface in the tire width direction are sequentially included in a direction opposite to the tire rotation direction.

As illustrated, in the present invention, a groove group including the first groove 21, the second groove 22, and the third groove 23 as a set is substantially repeatedly arranged symmetrically with respect to the tire equator CL and shifted in the tire circumferential direction by 1/2 an arrangement pitch. Here, in the present invention, the arrangement pitch of a pattern means one unit of repetition of a pattern formed by a groove provided in a tire tread in the tire circumferential direction. The arrangement pitch of each groove in the present invention is not particularly limited, and may be, for example, about from 1/9 to 1/16 of the entire circumference of a tire.

The first groove 21 includes three bent portions from a first bent portion c1 to a third bent portion c3 in order from one tread end TE1 side, and includes four groove portions from a first groove portion 21A between one tread end TE1 and the first bent portion c1 to a fourth groove portion 21D between the third bent portion c3 and the other tread end TE2 each separated by the first bent portion c1 to the third bent portion c3 in order from the one tread end TE1 side. The first groove portion 21A and the second groove portion 21B extend in a tire rotation direction from one tread end TE1 to the other tread end TE2, and the third groove portion 21C and the fourth groove portion 21D extend in a direction opposite to the tire rotation direction from one tread end TE1 to the other tread end TE2. In the illustrated example, the first bent portion c1 and the second bent portion c2 are arranged on one side surface in the tire width direction on one tread end TE1 side, the third bent portion c3 is arranged on one side surface in the tire width direction on the other tread end TE2 side, and the third groove portion 21C is arranged across the tire equator.

In the illustrated example, at each opening of the first groove portion 21A and the fourth groove portion 21D of the first groove 21 at the tread ends TE1 and TE2, an acute land portion of land portions adjacent to each groove portion is chamfered in such a manner that the groove width of each groove portion is widened. This can suppress chipping of an end portion of the land portion at the opening portions of the first groove portion 21A and the fourth groove portion 21D, which is preferable.

Of the three bent portions c1, c2, and c3 of the first groove 21, the first bent portion c1 is positioned in a range of from the tire equator CL to from 1/2 to 5/8 of the half width P/2 of the peripheral length, the second bent portion c2 is positioned in a range of from the tire equator CL to from 1/16 to 3/16 of the half width P/2 of the peripheral length, and the third bent portion c3 is positioned in a range of from the tire equator CL to from 3/16 to 5/16 of the half width P/2 of the peripheral length. Here, in the present invention, the position of each bent portion is defined as the position of the intersection of two straight lines passing through the center of the groove width of two groove portions constituting each bent portion.

In the present invention, since the first groove 21 extends across the tire equator CL and opens to the tread end TE on both sides in the tire width direction, a water film on a tire grounding portion can be efficiently drained outward in the tire width direction. Since each of the bent portions c1 to c3 of the first groove 21 is located at a position distant from the tire equator CL, the rigidity during straight traveling can be ensured. Furthermore, since the first groove 21 is composed of a plurality of groove portions including a plurality of bent portions, a stable traveling performance with respect to inputs in various directions can be exhibited. Still furthermore, by arranging the bent portion c1 in the above-described range, both drainage and steering stability can be further improved.

In the present invention, the angle of each groove portion of the first groove 21 is defined as follows.

An acute angle *θ1* of angles formed by the first groove portion 21A with respect to the tire circumferential direction is 35° or more, and suitably 37° or more, and is 45°or less, and suitably 42° or less, and an acute angle *θ2* of angles formed by the second groove portion 21B with respect to the tire circumferential direction is 55° or more, and suitably 57° or more, and is 65° or less, and suitably 62° or less. An acute angle *θ3* of angles formed by the third groove portion 21C with respect to the tire circumferential direction is 20° or more, and suitably 22° or more, and is 30° or less, and suitably 27° or less, and an acute angle *θ4* of angles formed by the fourth groove portion 21D with respect to the tire circumferential direction is 55° or more, and suitably 57° or more, and is 65° or less, and suitably 62°. Here, in the present invention, the angle formed by each groove portion or groove with respect to the tire circumferential direction is defined as the angle formed by a straight line passing through the groove width center of each groove portion or groove with respect to the tire circumferential direction.

By setting the angle of each groove portion within the above-described range, water can be quickly drained in the tire width direction, which is preferable. In particular, in the present invention, among the bent portions of the first groove 21, the angle *θ2* + *θ3* of the small angle of the second bent portion c2 is formed to be the smallest, which can ensure steering stability and drainage. In particular, by setting the angle *θ*3 to 20° or more, drainage can be favorably attained from the shoulder side, and rigidity in the tire width direction near the tire equator can be ensured, and by setting the angle *θ*3 to 30° or less, water can be easily taken in from the center side and rigidity in the tire circumferential direction can be ensured.

The second groove 22 extends in the tire rotation direction from one tread end TE1 to the other tread end TE2 without crossing the tire equator CL, and the outer side end in the tire width direction opens to the tread end, and an inner side end 22i in the tire width direction terminates on one side surface in the tire width direction. The inner side end 22i in the tire width direction of the second groove 22 is in a range of from 1/2 to 3/4, and preferably in a range of from 5/8 to 3/4 of the half width P/2 of the peripheral length from the tire equator CL.

In the present invention, by positioning the inner side end 22i of the second groove 22 in the tire width direction in the above-described range, the rigidity of the tread portion on the shoulder side can be improved, and the rigidity during turning can be ensured while maintaining drainage.

An acute angle *θ5* of angles formed by the second groove 22 with respect to the tire circumferential direction is 55° or more, and preferably 57° or more, and 65° or less, and preferably 62° or less. By setting the angle *θ*5 of the second groove 22 in the above-described range, drainage to the shoulder side and rigidity in the straight traveling direction during turning can be balanced, which is preferable.

The third groove 23 includes one bent portion c4, and does not cross the tire equator CL, both side ends 23i and 23o in the tire width direction terminate in one side surface in the tire width direction, and the groove includes two groove portions separated by the bent portion c4, of a fifth groove portion 23A between the outer side end 23o in the tire width direction and the bent portion c4 and a sixth groove portion 23B between the bent portion c4 and the inner side end 23i in the tire width direction. The fifth groove portion 23A and the sixth groove portion 23B extend in the tire rotation direction from one tread end TE1 to the other tread end TE2. The inner side end 23i of the third groove 23 in the tire width direction is in a range of from 1/16 to 3/16 of the half width P/2 of the peripheral length from the tire equator CL, and the outer side end 23o of the third groove 23 in the tire width direction is in a range of from 5/8 to 7/8 of the half width P/2 of the peripheral length from the tire equator CL. Further, the bent portion c4 of the third groove 23 may be in a range of from 3/8 to 5/8 of the half width P/2 of the peripheral length from the tire equator CL.

In the present invention, since the third groove 23 does not cross the tire equator CL, the rigidity during straight traveling can be ensured. By positioning the inner side end 23i of the third groove 23 in the tire width direction in the above-described range, the rigidity during straight traveling can be ensured, and by positioning the bent portion c4 in the above-described range, the rigidity during straight traveling can also be ensured since the bent portion c4 of the third groove 23 is prevented from overlapping with the bent portion of the first groove 21 when viewed from the tire circumferential direction. Further, by positioning the outer side end 22o in the tire width direction in the above-described range, rigidity during traveling can be ensured.

The sixth groove portion 23B constituting the third groove 23 is arranged in such a manner that the extension of the inner side end 23i in the tire width direction intersects the third groove portion 21C of the first groove 21. By arranging the first groove 21 and the third groove 23 apart without directly intersecting as described above, respective groove portions are dispersedly arranged in the tire grounding portion, and since the tread portion is favorably bent and deformed, the ground contact property during straight traveling can be improved.

An acute angle *θ*6 of angles formed by the fifth groove portion 23A of the third groove 23 with respect to the tire circumferential direction is 55° or more, and suitably 57° or more, and 65° or less, and suitably 62° or less, and an acute angle *θ7* of angles formed by the sixth groove portion 23B of the third groove 23 with respect to the tire circumferential direction is 15° or more, and suitably 17° or more, and 25° or less, and suitably 22° or less. By making the angle *θ7* smaller than *θ6*, drainage can be improved while ensuring rigidity when traveling straight.

As described above, in the present invention, by arranging the central rubber 11C and the both-side rubber 11S having a relatively low modulus on a tread portion under predetermined conditions and arranging the first groove 21, the second groove 22, and the third groove 23 under predetermined conditions, a motorcycle tire maintaining rigidity and wear resistance during straight traveling, ensuring favorable steering stability by maintaining rigidity during turning, and also having improved wet grip performance during turning was realized.

In the present invention, it is preferable that the acute angle *θ4* of the angles formed by the fourth groove portion 21D of the first groove 21 with respect to the tire circumferential direction, the acute angle *θ5* of the angles formed by the second groove 22 with respect to the tire circumferential direction, and the acute angle *θ6* of the angles formed by the fifth groove portion 23A of the third groove 23 with respect to the tire circumferential direction satisfy *θ4* ≈ *θ5* ≈ *θ6*.

In other words, in the present invention, the angle *θ4* formed by the fourth groove portion 21D of the first groove 21 with respect to the tire circumferential direction, the angle *θ5* formed by the second groove 22 with respect to the tire circumferential direction, and the angle *θ6* formed by the fifth groove portion 23A of the third groove 23 with respect to the tire circumferential direction are substantially the same. This means that the fourth groove portion 21D of the first groove 21, the second groove 22, and the fifth groove portion 23A of the third groove 23 are arranged substantially in parallel. By making the fourth groove portion 21D of the first groove 21, the second groove 22, and the fifth groove portion 23A of the third groove 23 substantially parallel in such a manner, even when a plurality of grooves are arranged on the shoulder side where the low modulus both-side rubber 11S is present, the rigidity is not compromised. Here, the fact that the angles *θ4*, *θ5*, and *θ6* are substantially the same means that a manufacturing error is included. For example, the angles are substantially the same within an error range of ± 10%.

In the present invention, it is preferable that a distance *a* between the second groove 22 and the third groove 23 and a distance *b* between the third groove 23 and the first groove 21 in the tire circumferential direction measured between the open ends of the tire grounding portion satisfy a ≈ b. By arranging the first groove 21, the second groove 22, and the third groove 23 on a shoulder side where the low-hardness both-side rubber 11S is arranged at substantially equal intervals in the tire circumferential direction, the rigidity in the straight traveling direction during turning can be ensured. Here, the distance a between the second groove 22 and the third groove 23 substantially means the distance between the second groove 22 and the fifth groove portion 23A of the third groove 23, and the distance b between the third groove 23 and the first groove 21 substantially means the distance between the fifth groove portion 23A of the third groove 23 and the fourth groove portion 21D of the first groove 21.

Here, the distances *a* and *b* can be measured, for example, at the same position in the tire width direction where the first groove 21, the second groove 22, and the third groove 23 are arranged in such a manner to overlap when viewed in the tire circumferential direction. The fact that the distances *a* and *b* between the grooves are substantially the same means that a manufacturing error is included. For example, when the distance is within an error range of ± 10% on an mm basis, the distances are substantially the same.

In the present invention, when the angles *θ4*, *θ5*, and *θ6* satisfy *θ4* ≈ *θ5* ≈ *θ6*, and the distances *a* and *b* satisfy *a* ≈ *b*, an effect of the first groove 21, the second groove 22, and the third groove 23 on the shoulder side ensures drainage and suppresses formation of a water film, while ensuring rigidity in the straight traveling direction during turning.

In the present invention, by arranging the first groove 21, the second groove 22, and the third groove 23 as above, the largest number of grooves are arranged in the region from the tire equator CL to the point 3/4 of the half width P/2 of the peripheral length to the tread end TE on the shoulder side of the tire grounding portion. Here, the number of grooves arranged in the above-described region means the number of grooves whose length in the tire width direction accounts for 40% or more of the above-described region. In the example shown in the figure, four grooves are arranged.

In the present invention, the groove width of the first groove 21, the second groove 22, and the third groove 23 can be, for example, in a range of from 5 mm to 10 mm. Here, the groove width of each groove means a width on a tread surface measured in a direction perpendicular to the extending direction of the groove. As illustrated, the groove width of each groove may vary along the direction in which the groove extends. The groove depth of the first groove 21, the second groove 22, and the third groove 23 can be, for example, from 2 mm to 5 mm.

In the present invention, in addition to the first groove 21, the second groove 22 and the third groove 23, a shallow groove 31 can be arranged near the second groove 22. The shallow groove 31 is composed of a portion extending from the inner side end 22i in the tire width direction of the second groove 22 on the extension of the second groove 22, a portion extending in parallel with the second groove 22 on the tire rotation direction side of the second groove 22, and a portion that connects these two portions, and is provided in such a manner to surround the second groove 22. Here, in the present invention, the shallow groove means a groove with a narrow groove width and a shallow groove depth, such that the maximum groove width is 0.1 mm or more, and preferably 0.5 mm or more, and 2.0 mm or less, and preferably 1.5 mm or less and the maximum groove depth is 0.1 mm or more, and preferably 0.2 mm or more, and 2.0 mm or less, and preferably 0.5 mm or less. By providing a shallow groove having a groove width and a groove depth in the above-described ranges on a tire grounding portion, drainage at an early stage of use of a tire can be improved, which is preferable. In the illustrated example, shallow grooves 32 are also arranged in a region extending to the tread end TE on the extension of the outer side end 23o in the tire width direction of the third groove 23 and a region extending from the sixth groove portion 23B of the third groove 23 to the fourth groove portion 21D of the first groove 21.

In the tire of the present invention, it is important that arrangement conditions of a central rubber and a both-side rubber constituting a tread rubber, and arrangement conditions of a groove provided on a tire grounding portion were defined as described above, and as a result, a desired effect can be obtained. Other details of the tire structure and the materials used are not particularly limited, and may be configured as follows, for example.

The carcass ply 1 is composed of a layer, in which a reinforcing cord is covered with rubber, and it is necessary to arrange at least one carcass ply, and two or more carcass plies may be arranged. For example, one to three carcass plies can be arranged. The angle of a reinforcing cord of the carcass ply 1 is from 0 to 25° with respect to the tire width direction in the case of a radial tire, and is from 40 to 70° with respect to the tire width direction in the case of a bias tire. As a reinforcing cord of the carcass ply, an organic fiber cord such as polyester such as aliphatic polyamide (nylon), aromatic polyamide (aramid), rayon, polyethylene naphthalate (PEN), or polyethylene terephthalate (PET) is usually used.

As the belt layer 2, one or more sheets of a spiral belt formed by spirally winding a long rubber-coated cord in which one reinforcing cord is covered with rubber or a belt ply with a plurality of reinforcing cords covered with rubber and having a cord direction substantially equal to the tire circumferential direction, or approximately 0° (3° or less) with respect to the tire circumferential direction can be used. As the reinforcing cord of the belt layer 2, in addition to a steel cord, a cord of a material of an organic fiber such as aromatic polyamide (aramid, for example, Kevlar (trade name) manufactured by DuPont), polyethylene naphthalate (PEN), polyethylene terephthalate (PET), rayon, Zylon (registered trademark) (polyparaphenylene benzobisoxazole (PBO) fiber), or aliphatic polyamide (nylon), or glass fiber, carbon fiber, or the like can be appropriately selected and used. From the viewpoint of ensuring wear life and high speed durability at high levels, a steel cord is preferably used.

A reinforcement layer 4 composed of a layer in which a reinforcing cord is covered with rubber can be provided inside the belt layer 2 in the tire radial direction, and the angle of the reinforcing cord of the reinforcement layer 4 can be from 0 to 10° with respect to the tire circumferential direction. An organic fiber such as aromatic polyamide (aramid, for example, Kevlar (trade name) manufactured by DuPont), polyethylene naphthalate (PEN), polyethylene terephthalate (PET), rayon, zylon (registered trademark) (polyparaphenylene benzobisoxazole (PBO) fiber), or aliphatic polyamide (nylon) is used for the reinforcing cord of the reinforcement layer 4.

For example, as illustrated, a bead core 3 is embedded in each of a pair of bead portions 13 of the motorcycle tire of the present invention, and the carcass ply 1 is locked around the bead core 3 from the inside of the tire to the outside. Although not illustrated, an end of the carcass ply 1 may be locked by being sandwiched between bead wires from both sides. An inner liner (not illustrated) is formed on the innermost layer of the tire of the present invention.

The tire of the present invention is applicable as both a front tire and a rear tire of a motorcycle, and is particularly suitable as a rear tire, and can be applied to any tire having a radial structure or a bias structure.

### EXAMPLES

Hereinafter, the present invention will be described in more detail with reference to Examples.

### (Example 1)

A motorcycle tire of Example 1 having a sectional structure as shown in FIG. 1 at a tire size of 150/70R17MC and having a tread pattern as shown in FIG. 2 on a tire grounding portion was prepared. One carcass ply using a PET cord was arranged at a cord angle of 90° with respect to the tire circumferential direction, and one reinforcement layer using an aramid cord at a cord angle of 0° with respect to the tire circumferential direction and one spiral belt using a steel cord at a cord angle of approximately 0° with respect to the tire circumferential direction were sequentially arranged outside the carcass ply in the tire radial direction.

A tread portion forming the tire grounding portion was composed of a central rubber arranged across the tire equator and a both-side rubber arranged at both ends in the tire width direction, and had a structure in which the central rubber and the both-side rubber were sequentially layered on both side portions in the tire width direction, and the both-side rubber extended from the tire equator to a position of 3/8 of the half width of the peripheral length. The 300% modulus M₃₀₀(C) at 100°C of a central rubber and the 300% modulus M₃₀₀(S) at 100°C of a both-side rubber satisfied M₃₀₀(C) > M₃₀₀(S).

Of the three bent portions of the first groove, the first bent portion was located at a position 9/16 of the half width of the peripheral length from the tire equator, the second bent portion was located at a position 1/8 of the half width of the peripheral length from the tire equator, and the third bent portion was located at a position 1/4 of the half width of the peripheral length from the tire equator. Further, the inner side end of the second groove in the tire width direction was located at a position 9/16 of the half width of the peripheral length from the tire equator, the inner side end of the third groove in the tire width direction was located at a position 3/16 of the half width of the peripheral length from the tire equator, the bent portion of the third groove was located at a position 1/2 of the half width of the peripheral length from the tire equator, and the outer side end in the tire width direction of the third groove was located at a position 7/8 of the half width of the peripheral length from the tire equator.

Still furthermore, the acute angle *θ*1 of the angles formed by the first groove portion of the first groove with respect to the tire circumferential direction was 40°, the acute angle *θ*2 of the angles formed by the second groove portion of the first groove with respect to the tire circumferential direction was 60°, the acute angle *θ*3 of the angles formed by the third groove portion of the first groove with respect to the tire circumferential direction was 25°, and the acute angle *θ*4 of the angles formed by the fourth groove portion of the first groove with respect to the tire circumferential direction was 60°. Still furthermore, the acute angle *θ*5 of the angles formed by the second groove with respect to the tire circumferential direction was 60°, the acute angle *θ*6 of the angles formed by the fifth groove portion of the third groove with respect to the tire circumferential direction was 60°, and the acute angle *θ*7 of the angles formed by the sixth groove portion of the third groove with respect to the tire circumferential direction was 20°.

A distance *a* between the second groove and the third groove and a distance *b* between the third groove and the first groove in the tire circumferential direction measured between the open ends of the tire grounding portion were 40 mm and 40 mm, respectively.

### (Comparative Example 1)

A motorcycle tire of Comparative Example 1 was prepared in the same manner as in Example 1 except that the entire tread portion forming the tire grounding portion was formed of the above-described central rubber.

### (Comparative Example 2)

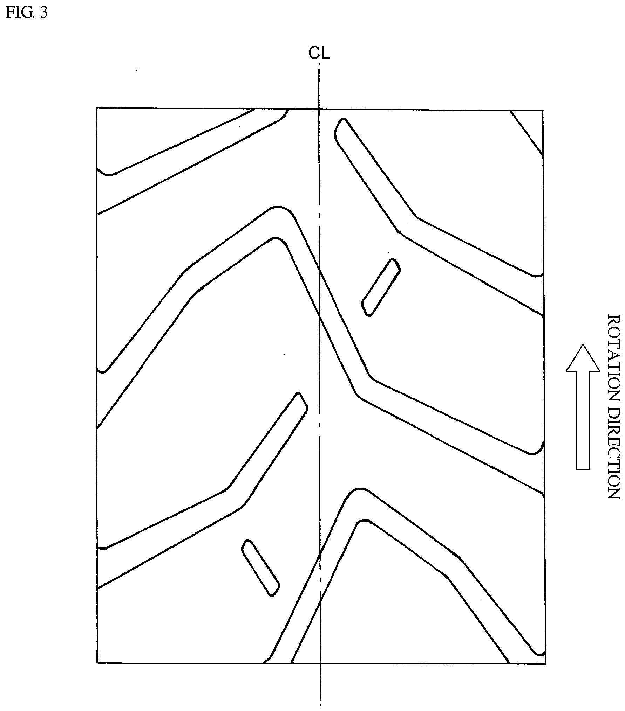

A motorcycle tire of Comparative Example 2 was prepared in the same manner as in Example 1 except that a tread pattern shown in FIG. 3 was used.

Each of the obtained test tires was mounted on a rim having a rim size of MT 4.00 × 17 inches, mounted as a rear tire of a 1,000-cc motorcycle, and filled to an internal pressure of 250 kPa. As the front tire, a commercially available tire having a tire size of 110/80R19MC was used.

### (Wet Grip Performance During Turning)

For each of the test tires, a professional rider ran an actual vehicle on a test course on a wet road surface, and evaluated the grip performance during turning by feeling. The results are shown by an index with Comparative Example 1 being 100. The larger the numerical value, the more excellent the wet grip performance, which is favorable.

### (Steering Stability During Turning)

For each of the test tires, a professional rider ran an actual vehicle on a test course on a dry road surface, and evaluated the steering stability during turning by feeling. The results are shown by an index with Comparative Example 1 being 100. The larger the numerical value, the more excellent the steering stability, which is favorable.

The results are shown in the table below.

**[Table 1]**

| | Example 1 | Comparative Example 1 | Comparative Example 2 |
|---|---|---|---|
| Wet grip performance during turning (index) | 115 | 100 | 110 |
| Steering stability during turning (index) | 108 | 100 | 105 |

As shown in the above table, it was confirmed that the tire of Example 1 obtained by arranging a central rubber and a both-side rubber having a relatively low modulus on a tread portion under predetermined conditions and arranging a first groove, a second groove, and a third groove under predetermined conditions was able to achieve both steering stability during turning and wet grip performance during turning.

### DESCRIPTION OF SYMBOLS

- 1: Carcass ply
- 2: Belt layer
- 3: Bead core
- 4: Reinforcement layer
- 10: Tire
- 11: Tread portion
- 11C: Central rubber
- 11S: Both-side rubber
- 12: Sidewall portion
- 13: Bead portion
- 21: First groove
- 21A: First groove portion
- 21B: Second groove portion
- 21C: Third groove portion
- 21D: Fourth groove portion
- 22: Second groove
- 22i: Inner side end in tire width direction of second groove
- 23: Third groove
- 23A: Fifth groove portion
- 23B: Sixth groove portion
- 23i: Inner side end in tire width direction of third groove
- 23o: Outer side end in tire width direction of third groove
- 31, 32: Shallow groove
- c1: First bent portion
- c2: Second bent portion
- c3: Third bent portion
- c4: Bent portion

## Claims

1. A motorcycle tire (10) comprising a directional pattern in which a rotation direction when mounted on a vehicle is specified on a tire grounding portion, wherein
a tread portion (11) forming the tire grounding portion comprises a central rubber (11C) arranged across a tire equator (CL) and a both-side rubber (11S) arranged at both ends in a tire width direction and having a lower 300% modulus at 100°C than the central rubber (11C), and has a structure in which the central rubber (11C) and the both-side rubber (11S) are sequentially layered on both side portions in the tire width direction, and the central rubber (11C) extends from the tire equator (CL) to a position of 1/4 to 1/2 of a half width of the peripheral length between both tread ends (TE),
on the tire grounding portion, a first groove (21) that extends across the tire equator (CL) and opens at both ends in the tire width direction at tread ends (TE), a second groove (22) whose outer side end in the tire width direction is open at one tread end (TE) and whose inner side end (22i) in the tire width direction terminates in one side surface in the tire width direction, and a third groove (23) whose both ends in the tire width direction terminate in one side surface in the tire width direction are sequentially included in a direction opposite to a tire rotation direction,
the first groove (21) comprises three bent portions from a first bent portion (c1) to a third bent portion (c3) in order from the one tread end side and comprises four groove portions from a first groove portion (21A) between the one tread end (TE) and the first bent portion (c1) to a fourth groove portion (21D) between the third bent portion (c3) and the other tread end (TE) each separated by the first bent portion (c1) to the third bent portion (c3) in order from the one tread end side,
the third groove (23) comprises one bent portion (c4) and comprises two groove portions, separated by the bent portion, of a fifth groove portion (23A) between the outer side end (23o) in the tire width direction and the bent portion (c4) and a sixth groove portion (23B) between the bent portion (c4) and the inner side end (23i) in the tire width direction,
from the one tread end (TE) toward the other tread end (TE), the first groove portion (21A), the second groove portion (21B), the fifth groove portion (23A), the sixth groove portion, and the second groove (22) extend in the tire rotation direction, and the third groove portion (21C) and the fourth groove portion (21D) extend in a direction opposite to the tire rotation direction,
of the three bent portions of the first groove (21), the first bent portion (c1) is positioned in a range of from the tire equator (CL) to from 1/2 to 5/8 of the half width of the peripheral length, the second bent portion (c2) is positioned in a range of from the tire equator (CL) to from 1/16 to 3/16 of the half width of the peripheral length, and the third bent portion (c3) is positioned in a range of from the tire equator (CL) to from 3/16 to 5/16 of the half width of the peripheral length,
the inner side end (22i) in the tire width direction of the second groove (22) is positioned in a range of from the tire equator (CL) to from 1/2 to 3/4 of the half width of the peripheral length,
the inner side end (23i) in the tire width direction of the third groove (23) is positioned in a range of from the tire equator (CL) to from 1/16 to 3/16 of the half width of the peripheral length, and the outer side end (23o) in the tire width direction of the third groove (23) is positioned in a range of from the tire equator (CL) to from 5/8 to 7/8 of the half width of the peripheral length,
an acute angle *θ1* formed by the first groove portion (21A) of the first groove (21) with respect to the tire circumferential direction is in a range of from 35° to 45°, an acute angle *θ2* formed by the second groove portion (21B) of the first groove (21) with respect to the tire circumferential direction is in a range of from 55° to 65°, an acute angle *θ3* formed by the third groove portion (21C) of the first groove (21) with respect to the tire circumferential direction is in a range of from 20° to 30°, and an acute angle *θ4* formed by the fourth groove portion (21D) of the first groove (21) with respect to the tire circumferential direction is in a range of from 55° to 65°,
an acute angle *θ5* formed by the second groove (22) with respect to the tire circumferential direction is in a range of from 55° to 65°, and
an acute angle *θ6* formed by the fifth groove portion (23A) of the third groove (23) with respect to the tire circumferential direction is in a range of from 55° to 65°, and an acute angle *θ7* formed by the sixth groove portion of the third groove (23) with respect to the tire circumferential direction is in a range of from 15° to 25°.

2. The motorcycle tire (10) according to claim 1, wherein the acute angle *θ4* formed by the fourth groove portion (21D) of the first groove (21) with respect to the tire circumferential direction, the acute angle *θ5* formed by the second groove (22) with respect to the tire circumferential direction, and the acute angle *θ6* formed by the fifth groove portion (23A) of the third groove (23) with respect to the tire circumferential direction satisfy *θ4* ≈ *θ5* ≈ *θ6*, and a distance *a* between the second groove (22) and the third groove (23) and a distance *b* between the third groove (23) and the first groove (21) in the tire circumferential direction measured between the open ends of the tire grounding portion satisfy *a* ≈ *b.*

3. The motorcycle tire (10) according to claim 1 or 2, wherein a shallow groove (31) is provided which is composed of a portion extending from the inner side end (22i) in the tire width direction of the second groove (22) on the extension of the second groove (22), a portion extending in parallel with the second groove (22) on the tire rotation direction side of the second groove (22), and a portion that connects these two portions, and is provided in such a manner to surround the second groove (22).

## Patentansprüche

1. Motorradreifen (10), der ein Richtungsmuster umfasst, in dem eine Drehrichtung, wenn er an einem Fahrzeug montiert ist, auf einem Reifen-Bodenberührungsabschnitt angegeben ist, wobei
ein Laufflächenabschnitt (11), der den Reifen-Bodenberührungsabschnitt bildet, einen mittigen Gummi (11C), der über einen Reifenäquator (CL) angeordnet ist, und einen beidseitigen Gummi (11S), der an beiden Enden in einer Reifenbreitenrichtung angeordnet ist und einen niedrigeren 300%-Modul bei 100 °C aufweist als der mittige Gummi (11C), umfasst und eine Struktur aufweist, in welcher der mittige Gummi (11C) und der beidseitige Gummi (11S) aufeinanderfolgend auf beiden Seitenabschnitten in der Reifenbreitenrichtung geschichtet sind und sich der mittige Gummi (11C) von dem Reifenäquator (CL) bis zu einer Position von 1/4 bis 1/2 einer halben Breite der Umfangslänge zwischen beiden Laufflächenenden (TE) erstreckt,
auf dem Reifen-Bodenberührungsabschnitt eine erste Rille (21), die sich über den Reifenäquator (CL) erstreckt und sich an beiden Enden in der Reifenbreitenrichtung an Laufflächenenden (TE) öffnet, eine zweite Rille (22), deren Außenseitenende in der Reifenbreitenrichtung an einem Laufflächenende (TE) offen ist und deren Innenseitenende (22i) in der Reifenbreitenrichtung in einer Seitenfläche in der Reifenbreitenrichtung endet, und eine dritte Rille (23), deren beide Enden in der Reifenbreitenrichtung in einer Seitenfläche in der Reifenbreitenrichtung enden, nacheinander in einer Richtung, entgegengesetzt zu einer Reifendrehrichtung, eingeschlossen sind,
die erste Rille (21) drei gebogene Abschnitte von einem ersten gebogenen Abschnitt (c1) bis zu einem dritten gebogenen Abschnitt (c3) in Reihenfolge von der einen Laufflächenendseite aus umfasst und vier Rillenabschnitte von einem ersten Rillenabschnitt (21A) zwischen dem einen Laufflächenende (TE) und dem ersten gebogenen Abschnitt (c1) bis zu einem vierten Rillenabschnitt (21D) zwischen dem dritten gebogenen Abschnitt (c3) und dem anderen Laufflächenende (TE) umfasst, jeweils getrennt durch den ersten gebogenen Abschnitt (c1) bis zu dem dritten gebogenen Abschnitt (c3) in Reihenfolge von der einen Laufflächenendseite aus,
die dritte Rille (23) einen gebogenen Abschnitt (c4) umfasst und zwei Rillenabschnitte umfasst, die durch den gebogenen Abschnitt getrennt werden, von einem fünften Rillenabschnitt (23A) zwischen dem Außenseitenende (23o) in der Reifenbreitenrichtung und dem gebogenen Abschnitt (c4) und einem sechsten Rillenabschnitt (23B) zwischen dem gebogenen Abschnitt (c4) und dem Innenseitenende (23i) in der Reifenbreitenrichtung,
von dem einen Laufflächenende (TE) hin zu dem anderen Laufflächenende (TE) sich der erste Rillenabschnitt (21A), der zweite Rillenabschnitt (21B), der fünfte Rillenabschnitt (23A), der sechste Rillenabschnitt und die zweite Rille (22) in der Reifendrehrichtung erstrecken und sich der dritte Rillenabschnitt (21C) und der vierte Rillenabschnitt (21D) in einer Richtung, entgegengesetzt zu der Reifendrehrichtung, erstrecken,
von den drei gebogenen Abschnitten der ersten Rille (21) der erste gebogene Abschnitt (c1) in einem Bereich von dem Reifenäquator (CL) bis von 1/2 bis 5/8 der halben Breite der Umfangslänge positioniert ist, der zweite gebogene Abschnitt (c2) in einem Bereich von dem Reifenäquator (CL) bis von 1/16 bis 3/16 der halben Breite der Umfangslänge positioniert ist und der dritte gebogene Abschnitt (c3) in einem Bereich von dem Reifenäquator (CL) bis von 3/16 bis 5/16 der halben Breite der Umfangslänge positioniert ist,
das Innenseitenende (22i) in der Reifenbreitenrichtung der zweiten Rille (22) in einem Bereich von dem Reifenäquator (CL) bis von 1/2 bis 3/4 der halben Breite der Umfangslänge positioniert ist,
das Innenseitenende (23i) in der Reifenbreitenrichtung der dritten Rille (23) in einem Bereich von dem Reifenäquator (CL) bis von 1/16 bis 3/16 der halben Breite der Umfangslänge positioniert ist und das Außenseitenende (23o) in der Reifenbreitenrichtung der dritten Rille (23) in einem Bereich von dem Reifenäquator (CL) bis von 5/8 bis 7/8 der halben Breite der Umfangslänge positioniert ist,
ein spitzer Winkel *θ1*, der durch den ersten Rillenabschnitt (21A) der ersten Rille (21) in Bezug auf die Reifenumfangsrichtung gebildet wird, in einem Bereich von 35° bis 45° liegt, ein spitzer Winkel *θ2*, der durch den zweiten Rillenabschnitt (21B) der ersten Rille (21) in Bezug auf die Reifenumfangsrichtung gebildet wird, in einem Bereich von 55° bis 65° liegt, ein spitzer Winkel *θ3*, der durch den dritten Rillenabschnitt (21C) der ersten Rille (21) in Bezug auf die Reifenumfangsrichtung gebildet wird, in einem Bereich von 20° bis 30° liegt und ein spitzer Winkel *θ4*, der durch den vierten Rillenabschnitt (21D) der ersten Rille (21) in Bezug auf die Reifenumfangsrichtung gebildet wird, in einem Bereich von 55° bis 65° liegt,
ein spitzer Winkel *θ5*, der durch die zweite Rille (22) in Bezug auf die Reifenumfangsrichtung gebildet wird, in einem Bereich von 55° bis 65° liegt, und
ein spitzer Winkel *θ6*, der durch den fünften Rillenabschnitt (23A) der dritten Rille (23) in Bezug auf die Reifenumfangsrichtung gebildet wird, in einem Bereich von 55° bis 65° liegt und ein spitzer Winkel *θ7*, der durch den sechsten Rillenabschnitt der dritten Rille (23) in Bezug auf die Reifenumfangsrichtung gebildet wird, in einem Bereich von 15° bis 25° liegt.

2. Motorradreifen (10) nach Anspruch 1, wobei der spitze Winkel *θ4*, der durch den vierten Rillenabschnitt (21D) der ersten Rille (21) in Bezug auf die Reifenumfangsrichtung gebildet wird, der spitze Winkel *θ5*, der durch die zweite Rille (22) in Bezug auf die Reifenumfangsrichtung gebildet wird, und der spitze Winkel *θ6*, der durch den fünften Rillenabschnitt (23A) der dritten Rille (23) in Bezug auf die Reifenumfangsrichtung gebildet wird, *θ4* ≈ *θ5* ≈ *θ6* erfüllen und ein Abstand *a* zwischen der zweiten Rille (22) und der dritten Rille (23) und ein Abstand *b* zwischen der dritten Rille (23) und der ersten Rille (21) in der Reifenumfangsrichtung, gemessen zwischen den offenen Enden des Reifen-Bodenberührungsabschnitts, *a* ≈ *b* erfüllen.

3. Motorradreifen (10) nach Anspruch 1 oder 2, wobei eine flache Rille (31) bereitgestellt wird, die aus einem Abschnitt, der sich von dem Innenseitenende (22i) in der Reifenbreitenrichtung der zweiten Rille (22) auf der Verlängerung der zweiten Rille (22) erstreckt, einem Abschnitt, der sich parallel zu der zweiten Rille (22) auf der Reifendrehrichtungsseite der zweiten Rille (22) erstreckt, und einem Abschnitt, der diese zwei Abschnitte verbindet, besteht und auf eine solche Weise bereitgestellt wird, dass sie die zweite Rille (22) umgibt.

## Revendications

1. Bandage pneumatique pour motocycle (10), comprenant un motif directionnel dans lequel une direction de rotation, lors de son montage sur un véhicule, est spécifiée sur une partie de contact au sol du bandage pneumatique, dans lequel
une partie de bande de roulement (11) formant la partie de contact au sol du bandage pneumatique comprend une gomme centrale (11C) agencée à travers un équateur du bandage pneumatique (CL) et une gomme bilatérale (11S) agencée au niveau des deux extrémités, dans une direction de la largeur du bandage pneumatique, et ayant un module à 300% à 100°C inférieur à celui de la gomme centrale (11C), et a une structure dans laquelle la gomme centrale (11C) et la gomme bilatérale (11S) sont stratifiées séquentiellement sur les deux parties latérales, dans la direction de la largeur du bandage pneumatique, et la gomme centrale (11C) s'étend de l'équateur du bandage pneumatique (CL) vers une position représentant 1/4 à 1/2 d'une demi-largeur de la longueur périphérique entre les deux extrémités de la bande de roulement (TE),
sur la partie de contact au sol du bandage pneumatique, une première rainure (21) qui s'étend à travers l'équateur du bandage pneumatique (CL) et est ouverte au niveau des deux extrémités, dans la direction de la largeur du bandage pneumatique, au niveau des extrémités de la bande de roulement (TE), une deuxième rainure (22) dont l'extrémité latérale externe, dans la direction de la largeur du bandage pneumatique, est ouverte au niveau d'une extrémité de la bande de roulement (TE) et dont l'extrémité latérale interne (22i), dans la direction de la largeur du bandage pneumatique, se termine dans une surface latérale dans la direction de la largeur du bandage pneumatique, et une troisième rainure (23) dont les deux extrémités, dans la direction de la largeur du bandage pneumatique, se terminent dans une surface latérale, dans la direction de la largeur du bandage pneumatique, sont séquentiellement incluses dans une direction opposée à une direction de rotation du bandage pneumatique ;
la première rainure (21) comprend trois parties fléchies, d'une première partie fléchie (c1) vers une troisième partie fléchie (c3), dans l'ordre à partir dudit un côté d'extrémité de la bande de roulement, et comprend quatre parties de rainure, d'une première partie de rainure (21A) entre ladite une extrémité de la bande de roulement (TE) et la première partie fléchie (c1) vers une quatrième partie de rainure (21D) entre la troisième partie fléchie (c3) et l'autre extrémité de la bande de roulement (TE), séparées chacune par la première partie fléchie (c1) vers la troisième partie fléchie (c3), dans l'ordre à partir dudit un côté d'extrémité de la bande de roulement ;
la troisième rainure (23) comprend une partie fléchie (c4) et comprend deux parties de rainure, séparées par la partie fléchie d'une cinquième partie de rainure (23A) entre l'extrémité latérale externe (23o), dans la direction de la largeur du bandage pneumatique, et la partie fléchie (c4), et une sixième partie de rainure (23B) entre la partie fléchie (c4) et l'extrémité latérale interne (23i), dans la direction de la largeur du bandage pneumatique ;
de ladite une extrémité de la bande de roulement (TE) vers l'autre extrémité de la bande de roulement (TE), la première partie de rainure (21A), la deuxième partie de rainure (21B), la cinquième partie de rainure (23A), la sixième partie de rainure et la deuxième rainure (22) s'étendent dans la direction de rotation du bandage pneumatique, et la troisième partie de rainure (21C) et la quatrième partie de rainure (21D) s'étendent dans une direction opposée à la direction de rotation du bandage pneumatique ;
parmi les trois parties fléchies de la première rainure (21), la première partie fléchie (c1) est positionnée dans le cadre d'un intervalle représentant, à partir de l'équateur du bandage pneumatique (CL), 1/2 à 5/8 de la demi-largeur de la longueur périphérique, la deuxième partie fléchie (c2) est positionnée dans le cadre d'un intervalle représentant, à partir de l'équateur du bandage pneumatique (CL), 1/16 à 3/16 de la demi-largeur de la longueur périphérique, et la troisième partie fléchie (c3) est positionnée dans le cadre d'un intervalle représentant, à partir de l'équateur du bandage pneumatique (CL), 3/16 à 5/16 de la demi-largeur de la longueur périphérique ;
l'extrémité latérale interne (22i), dans la direction de la largeur du bandage pneumatique, de la deuxième rainure (22) est positionnée dans le cadre d'un intervalle représentant, à partir de l'équateur du bandage pneumatique (CL), 1/2 à 3/4 de la demi-largeur de la longueur périphérique ;
l'extrémité latérale interne (23i), dans la direction de la largeur du bandage pneumatique, de la troisième rainure (23) est positionnée dans le cadre d'un intervalle, représentant, à partir de l'équateur du bandage pneumatique (CL), 1/16 à 3/16 de la demi-largeur de la longueur périphérique, et l'extrémité latérale externe (23o), dans la direction de la largeur du bandage pneumatique, de la troisième rainure (23) est positionnée dans le cadre d'un intervalle représentant, à partir de l'équateur du bandage pneumatique (CL), 5/8 à 7/8 de la demi-largeur de la longueur périphérique ;
un angle aigu *θ1*formé par la première partie de rainure (21A) de la première rainure (21) par rapport à la direction circonférentielle du bandage pneumatique, est compris dans un intervalle allant de 35° à 45°, un angle aigu *θ2* formé par la deuxième partie de rainure (21B) de la première rainure (21) par rapport à la direction circonférentielle du bandage pneumatique est compris dans un intervalle allant de 55° à 65°, un angle aigu *θ3* formé par la troisième partie de rainure (21C) de la première rainure (21) par rapport à la direction circonférentielle du bandage pneumatique est compris dans un intervalle allant de 20° à 30°, et un angle aigu *θ4* formé par la quatrième partie de rainure (21D) de la première rainure (21) par rapport à la direction circonférentielle du bandage pneumatique est compris dans un intervalle allant de 55° à 65° ;
un angle aigu *θ5* formé par la deuxième rainure (22) par rapport à la direction circonférentielle du bandage pneumatique est compris dans un intervalle allant de 55° à 65° ; et
un angle aigu *θ6* formé par la cinquième partie de rainure (23A) de la troisième rainure (23) par rapport à la direction circonférentielle du bandage pneumatique est compris dans un intervalle allant de 55° à 65°, et un angle aigu *θ7* formé par la sixième partie de rainure de la troisième rainure (23) par rapport à la direction circonférentielle du bandage pneumatique est compris dans un intervalle allant de 15° à 25°.

2. Bandage pneumatique pour motocycle (10) selon la revendication 1, dans lequel l'angle aigu *θ4* formé par la quatrième partie de rainure (21D) de la première rainure (21) par rapport à la direction circonférentielle du bandage pneumatique, l'angle aigu *θ5* formé par la deuxième rainure (22) par rapport à la direction circonférentielle du bandage pneumatique, et l'angle aigu *θ6* formé par la cinquième partie de rainure (23A) de la troisième rainure (23) par rapport à la direction circonférentielle du bandage pneumatique satisfont la relation de *θ4*≈*θ5*≈*θ6*, et une distance *a* entre la deuxième rainure (22) et la troisième rainure (23) et une distance *b* entre la troisième rainure (23) et la première rainure (21), dans la direction circonférentielle du bandage pneumatique, mesurées entre les extrémités ouvertes de la partie de contact au sol du bandage pneumatique satisfont la relation de *a* ≈ *b.*

3. Bandage pneumatique (10) selon la revendication 1 ou 2, dans lequel une rainure peu profonde (31) est fournie, qui est composée d'une partie s'étendant de l'extrémité latérale interne (22i), dans la direction de la largeur du bandage pneumatique, de la deuxième rainure (22) sur l'extension de la deuxième rainure (22), d'une partie s'étendant en parallèle avec la deuxième rainure (22) sur le côté, dans la direction de rotation du bandage pneumatique, de la deuxième rainure (22) et d'une partie qui connecte ces deux parties, et est fournie de sorte à entourer la deuxième rainure (22).
